# EUROPÄISCHE PATENTSCHRIFT

(11) **EP 3 529 152 B1**
(45) Veröffentlichungstag und Bekanntmachung des Hinweises auf die Patenterteilung: **20.07.2022**
(21) Anmeldenummer: 16784899.3
(22) Anmeldetag: 21.10.2016
(51) Int. Cl.: B64D 11/00

(54) **ÜBERKOPF-GEPÄCKFACH FÜR EIN FLUGZEUG**
OVERHEAD LUGGAGE COMPARTMENT FOR AN AIRCRAFT
COMPARTIMENT À BAGAGES SUPÉRIEUR POUR AÉRONEF

(43) Veröffentlichungstag der Anmeldung: 28.08.2019
(73) Patentinhaber: FACC AG, 4910 Ried im Innkreis (AT)
(72) Erfinder: KAMMERER, Bernhard, 4755 Zell an der Pram (AT)
(74) Vertreter: SONN Patentanwälte OG
(86) Internationale Anmeldenummer: PCT/EP2016/075346
(87) Internationale Veröffentlichungsnummer: WO 2018/072838

(56) Entgegenhaltungen:
- WO-A1-03/033346
- WO-A1-2015/136111
- WO-A1-2015/179889
- WO-A1-2017/075640
- DE-A1- 4 335 151
- DE-A1-102011 110 750
- DE-A1-102014 012 125
- DE-U1-202009 006 931
- US-A1- 2011 253 714

## Beschreibung

Die Erfindung betrifft ein Überkopf-Gepäckfach für ein Flugzeug, mit einem oberen Gepäckfachelement, mit einem unteren Gepäckfachelement, welches zwischen einer Offen- und einer Schließstellung beweglich ist, und mit einer ein Federelement und ein Dämpfungselement aufweisenden Feder- und Dämpfungseinrichtung, welche mit einem Seitenpaneel des oberen Gepäckfachelements und mit einer Seitenwand des unteren Gepäckfachelements verbunden ist.

Derartige Überkopf-Gepäckfächer sind beispielsweise aus der AT 513 939 bekannt. Zur kombinierten Kraftunterstützung und Dämpfung sind Feder-Dämpfer-Einheiten zwischen dem feststehenden Teil und dem beweglichen Teil des Überkopf-Gepäckfachs angeordnet. Beim Stand der Technik ist die Feder in den Dämpfer eingebaut, so dass die bekannten Feder-Dämpfer-Einheiten einen vergleichsweise großen Durchmesser aufweisen. Nachteiligerweise wird so das zur Verfügung stehende Aufnahmevolumen innerhalb des Gepäckfaches reduziert. Wenn an beiden Seiten jedes Gepäckfaches eine solche Feder-Dämpfer-Einheit angeordnet ist, verringert sich das Aufnahmevolumen entsprechend. Die Federkraft der Feder hängt maßgeblich von deren Durchmesser ab. Demnach ist es nicht ohne weiteres möglich, das Aufnahmevolumen des Gepäckfaches durch Verwendung einer schlankeren Feder zu vergrößern.

Weitere Überkopf-Gepäckfächer sind aus WO 03/033346 A1, US 2011/0253714 A1, DE 43 35 151 A1, DE 10 2014 012 125 A1 und DE 10 2011 110 750 A1 bekannt.

Daneben ist aus DE 20 2009 006 931 U1 ein Druckfluiddämpfer für Möbel bekannt, welcher zwei seitlich angeordnete Schraubenfedern aufweist.

Demnach besteht die Aufgabe der vorliegenden Erfindung darin, die Nachteile des Standes der Technik zu lindern bzw. zu beseitigen. Die Erfindung setzt sich daher insbesondere zum Ziel, das Aufnahmevolumen des Überkopf-Gepäckfachs der eingangs angeführten Art zu erhöhen, ohne die Unterstützung des Schließvorgangs durch die Feder- und Dämpfungseinrichtung zu beeinträchtigen.

Erfindungsgemäß ist das Federelement außerhalb des Dämpfungselements, in eine Richtung parallel zur Hauptebene des Seitenpaneels des oberen Gepäckfachelements bzw. der Seitenwand des unteren Gepäckfachelements versetzt zu dem Dämpfungselement angeordnet.

Demnach ist das Federelement der erfindungsgemäßen Feder- und Dämpfungseinrichtung außerhalb des Innenraums des Dämpfungselements, insbesondere neben dem Dämpfungselement, angeordnet. Die Längsachse des Federelements ist in eine Richtung parallel zur Hauptebene des Seitenpaneels des oberen Gepäckfachelements bzw. der Seitenwand des unteren Gepäckfachelements in einem Abstand zu der Längsachse des Dämpfungselements angeordnet. Demnach ist das Federelement in Richtung parallel zur Haupt- bzw. Paneelebene des Seitenpaneels des oberen Gepäckfachelements bzw. in Richtung parallel zur Haupt- bzw. Wandebene der Seitenwand des unteren Gepäckfachelements, d.h. bezogen auf den eingebauten Zustand des Gepäckfaches im Flugzeug im Wesentlichen senkrecht zur Flugrichtung, gegenüber dem Dämpfungselement versetzt angeordnet. Erfindungsgemäß ist es daher nicht erforderlich, dass das Dämpfungselement für die Aufnahme des Federelements dimensioniert werden muss. Diese Ausführung hat insbesondere den Vorteil, dass die Erstreckung der Feder- und Dämpfungseinrichtung in Richtung senkrecht zur Hauptebene der Seitenwand des oberen Gepäckfachelements, d.h. in Längsrichtung des Gepäckfachelements bzw. in Flugrichtung, reduziert werden kann. Auf diese Weise kann das Aufnahmevolumen des Gepäckfachelements vergrößert werden, ohne die insbesondere vom Durchmesser des Federelements abhängige Federkraft für die Unterstützung der Bewegung des unteren Gepäckfachelements von der Offen- in die Schließstellung zu beeinträchtigen. Die Anordnung des Federelements neben dem Dämpfungselement, quer zur Flugrichtung, hat hingegen keinen Einfluss auf das Aufnahmevolumen des Gepäckfachelements, da in diese Richtung ausreichender Einbauraum zur Verfügung steht. Vorteilhafterweise wird daher eine besonders flache Feder- und Dämpfungseinrichtung geschaffen. Demgegenüber ist das Federelement beim Stand der Technik in das Dämpfungselement integriert, woraus sich ein vergleichsweise großer Durchmesser ergibt, welcher nachteiligerweise die Längserstreckung zwischen zwei Seitenpaneelen des oberen Gepäckfachelements und damit das Aufnahmevolumen für die Gepäckstücke reduziert. Zur Unterstützung des Schließvorgangs ist das Federelement als Hebefeder ausgebildet, welche in Richtung der Schließstellung des unteren Gepäckfachelements vorgespannt ist. Demnach liegt das Federelement in der Offenstellung des unteren Gepäckfachelements in einem gespannten bzw. expandierten Zustand vor, wobei das Federelement bei der Überführung in die Schließstellung entspannt bzw. komprimiert wird.

Um die kombinierte Feder- und Dämpfungswirkung beim Öffnungs- bzw. Schließvorgang zu erreichen, ist bevorzugt vorgesehen, dass das Federelement benachbart dem Dämpfungselement angeordnet ist. Bei dieser Ausführung ist das Federelement neben dem Dämpfungselement, jedoch außerhalb und in einem Abstand davon angeordnet. Dadurch kann einerseits der Durchmesser des Dämpfungselements reduziert werden. Andererseits kann im Wesentlichen dieselbe Feder- und Dämpfungscharakteristik wie bei den im Stand der Technik üblichen Dämpfern mit eingebauter bzw. integrierter Feder erzielt werden.

Um das für Gepäckstücke zur Verfügung stehende Aufnahmevolumen im Innenraum zwischen dem oberen und unteren Gepäckfachelement zu vergrößern, ist es günstig, dass die Längsachse des Federelements im Wesentlichen parallel zur Längsachse des Dämpfungselements, in derselben Ebene parallel zur Hauptebene des Seitenpaneels des oberen Gepäckfachelements bzw. der Seitenwand des unteren Gepäckfachelements angeordnet ist. Dadurch wird eine flache Feder- und Dämpfungseinrichtung geschaffen, welche eine größere Erstreckung in Richtung der Hauptebene des Seitenpaneels des oberen Gepäckfachelements, d.h. quer zur Flugrichtung, als in Richtung senkrecht dazu, d.h. in Flugrichtung, aufweist. Auf diese Weise kann einerseits die Erstreckung der Feder- und Dämpfungseinrichtung in Flugrichtung minimiert werden, wodurch ein maximales Aufnahmevolumen für Gepäckstücke erzielt wird. Andererseits kann die Belastung der Feder- und Dämpfungseinrichtung in Gebrauch reduziert werden.

Die Feder- und Dämpfungseinrichtung weist zwei Federelemente auf, wobei das eine Federelement auf der einen Seite des Dämpfungselements und das andere Federelement auf der anderen Seite des Dämpfungselements angeordnet ist. Bei dieser Ausführung ist das Dämpfungselement zwischen zwei Federelementen angeordnet. Durch die Anordnung von zwei Federelementen kann der die Federkraft bestimmende Durchmesser jedes Federelements gegenüber einer Ausführung mit einer einzigen Feder reduziert werden. Dadurch kann der für den Einbau der Feder- und Dämpfungseinrichtung in Flugrichtung notwendige Einbauraum verringert werden, wodurch das Aufnahmevolumen des Gepäckfaches bei gleichbleibender Federunterstützung für den Schließvorgang weiter erhöht werden kann. Darüber hinaus kann bei dieser Ausführung zuverlässig verhindert werden, dass die Anordnung des Federelements außerhalb des Dämpfungselements ein Moment auf das Dämpfungselement bewirkt, welches Schäden an dem Dämpfungselement hervorrufen könnte. Durch die Anordnung von zwei Federelementen beidseits des Dämpfungselements in Richtung senkrecht zur Flugrichtung kann vorteilhafterweise erreicht werden, dass das Dämpfungselement im Wesentlichen ausschließlich in dessen Wirkungs- bzw. Längsrichtung beansprucht wird. Somit kann die Funktion der Feder- und Dämpfungseinrichtung für lange Einsatzzeiten gewährleistet werden. Vorzugsweise sind die Federelemente im Wesentlichen ident ausgebildet.

Zu diesem Zweck ist es überdies günstig, wenn die Federelemente im Wesentlichen in demselben Abstand zu dem Dämpfungselement angeordnet sind. Bei dieser Ausführung ist das Dämpfungselement im Wesentlichen mittig zwischen den beiden Federelementen angeordnet, so dass Querkräfte auf das Dämpfungselement beim Öffnen bzw. Schließen des Gepäckfaches zuverlässig verhindert werden.

Die einen Enden der Federelemente sind über eine Umlenkrolle miteinander verbunden. Da die Federkräfte nicht exakt gleich sind, dient die Umlenkrolle zwischen den Federelementen zur Vermeidung eines Moments auf das Dämpfungselements. Somit wird ein Verbiegen des Dämpfungselements zuverlässig vermieden. Vorzugsweise sind die Enden der Federelemente über ein biegsames Längselement, insbesondere ein Draht- bzw. Seilstück, miteinander verbunden, welches um die Umlenkrolle geführt ist. Das biegsame Längselement kann an beiden Enden Haken aufweisen, welche in entsprechende Ösen an den jeweiligen Enden der Federelemente eingehängt sind.

Zur Aufbringung der Federkraft beim Bewegen des unteren Gepäckfachelements von der Offen- in die Schließstellung ist es weiters günstig, wenn die anderen Enden der Federelemente an einer gemeinsamen Lagereinrichtung, insbesondere einer Lagerplatte, befestigt sind.

Zur Kraftübertragung auf das untere Gepäckfachelement beim Schließvorgang ist es günstig, dass das eine Ende des Dämpfungselements gelenkig an der Seitenwand des unteren Gepäckfachelements und das andere Ende des Dämpfungselements gelenkig an dem Seitenpaneel des oberen Gepäckfachelements angeordnet ist. Bevorzugt ist die Seitenwand des unteren Gepäckfachelements mit einer Lasche verbunden, an welcher die Schwenkachse des einen Endes des Dämpfungselements angeordnet ist.

Gemäß einer besonders bevorzugten Ausführung ist als Federelement eine Schraubenfeder und/oder als Dämpfungselement ein Öldämpfer, vorgesehen. Das Dämpfungselement weist bevorzugt eine Zug- und eine Druckstufe auf, so dass das Dämpfungselement sowohl beim Öffnungs- als auch beim Schließvorgang wirkt.

Gemäß einer besonders bevorzugten Ausführung des Gepäckfaches ist das untere Gepäckfachelement über ein Gelenk verschwenkbar an dem oberen Gepäckfachelement angeordnet ist. Dadurch wird eine Verschwenkung des unteren Gepäckfachelements zwischen der Offenstellung, in welcher eine Ladeöffnung zur Beladung des Gepäckfaches mit Gepäckstücken freigegeben ist, und einer Schließstellung, in welcher die Ladeöffnung verschlossen ist, um eine in Längsrichtung des Gepäckfaches, d.h. in Flugrichtung, verlaufende, beim Öffnungs- bzw. Schließvorgang im Wesentlichen ortsfeste Schwenkachse ermöglicht. Die zuvor beschriebene Feder- und Dämpfungseinrichtung kann jedoch auch bei anderen Ausführungen von Überkopf-Gepäckfächern für Flugzeuge verwendet werden. Beispielsweise kann die Feder- und Dämpfungseinrichtung bei einem Überkopf-Gepäckfach mit absenkbarem unteren Gepäckfachelement vorgesehen sein, bei welcher das untere Gepäckfachelement nicht um eine ortsfeste Schwenkachse verschwenkt, sondern von der oberen Schließ- in die untere Offenstellung und umgekehrt verlagerbar ist.

Die Erfindung wird nachstehend anhand eines bevorzugten Ausführungsbeispiels, auf das sie jedoch nicht beschränkt sein soll, weiter erläutert. In der Zeichnung zeigt:
Fig. 1 schematisch eine schaubildliche Ansicht eines Überkopf-Gepäckfachs für Flugzeuge, wobei zwischen einem oberen Gepäckfachelement und einem daran verschwenkbar gelagerten unteren Gepäckfachelement eine herkömmliche Feder- und Dämpfungseinrichtung angeordnet ist, bei welcher die Feder in den Dämpfer eingebaut ist;
Fig. 2 eine Seitenansicht eines erfindungsgemäßen Überkopf-Gepäckfaches in der Offenstellung, wobei die Feder- und Dämpfungseinrichtung zwei Federelemente außerhalb des Dämpfungselements aufweist, die auf gegenüberliegenden Seiten neben dem Dämpfungselement angeordnet sind;
Fig. 3 eine Seitenansicht des erfindungsgemäßen Überkopf-Gepäckfaches in einer Zwischenstellung zwischen der Offenstellung gemäß Fig. 2 und der Schließstellung gemäß Fig. 4;
Fig. 4 eine Seitenansicht des erfindungsgemäßen Überkopf-Gepäckfaches in der Schließstellung; und
Fig. 5 eine Detailansicht der Feder- und Dämpfungseinrichtung gemäß Fig. 2 bis 4.

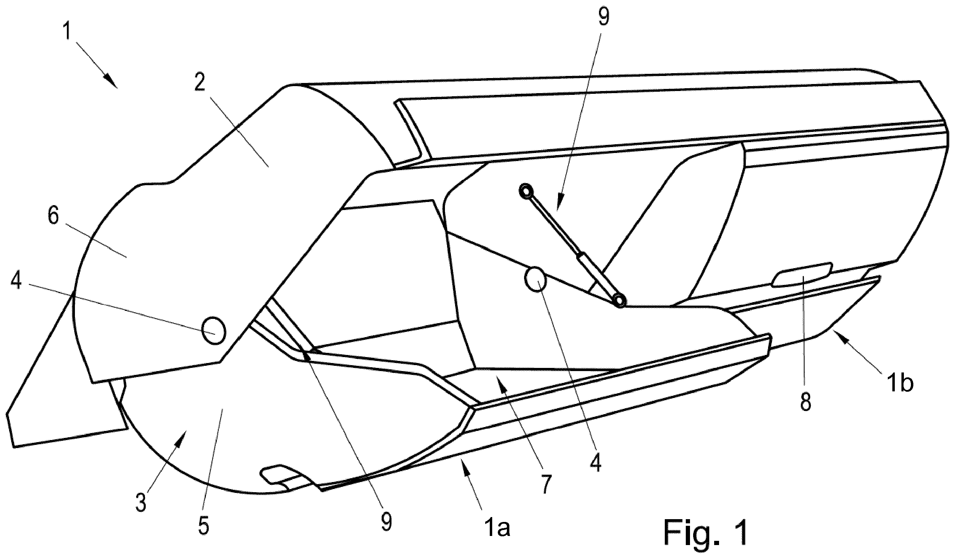

In Fig. 1 ist ein Überkopf-Gepäckfach 1 für Flugzeuge gezeigt, welches in der gezeigten Ausführung zwei ident ausgebildete Gepäckfachmodule 1a, 1b aufweist. Selbstverständlich kann jedoch auch nur ein solches Gepäckfachmodul 1a, 1b oder es können mehr als zwei solche Gepäckfachmodule 1a, 1b vorgesehen sein. Die Gepäckfachmodule 1a, 1b weisen jeweils ein feststehendes oberes Gepäckfachelement 2 auf, welches an einem Strukturelement, insbesondere an einem Flugzeugrumpf (nicht gezeigt), befestigbar ist. Darüber hinaus weist das Gepäckfach 1 ein bewegliches unteres Gepäckfachelement 3 auf. Das Gepäckfach 1 weist eine Längserstreckung auf, welche im eingebauten Zustand in Flugrichtung angeordnet ist. Das bewegliche Gepäckfachelement 3 ist beidseitig über Gelenke 4 mit Gelenkachsen an dem feststehenden Gepäckfachelement 2 aufgehängt. Die Gelenke 4 befinden sich an überlappenden Abschnitten von Seitenwänden 5 des unteren Gepäckfachelements 3 und Seitenpaneelen 6 des oberen Gepäckfachelements 2. Die Seitenwände 5 des unteren Gepäckfachelements 3 und die Seitenpaneele 6 des oberen Gepäckfachelements 2 sind jeweils im Wesentlichen eben bzw. plan ausgebildet, wobei die Seitenwände 5 des unteren Gepäckfachelements 3 im Wesentlichen parallel zu den Seitenpaneelen 6 des oberen Gepäckfachelements 2 angeordnet sind. Die Seitenwände 5 des unteren Gepäckfachelements 3 stehen seitlich von einem Boden 5a hoch, so dass das untere Gepäckfachelement 3 zur Aufnahme von Gepäckstücken als Mulde, Halbschütte bzw. U-förmiges Gepäckfach ausgebildet ist. Das untere Gepäckfachelement 2 ist zwischen einer Offenstellung (vgl. das Gepäckfachmodul 1a in Fig. 1), in welcher eine Ladeöffnung 7 freigegeben ist, und einer Schließstellung (vgl. das Gepäckfachmodul 1b in Fig. 1), in welcher die Ladeöffnung 7 verschlossen ist, verschwenkbar. Zu diesem Zweck weist das untere Gepäckfachelement 3 an der Sichtseite ein Griffelement 8 auf, mit welchem das Gepäckfach 1 geöffnet bzw. geschlossen werden kann.

Weiters ist aus Fig. 1 schematisch eine Feder- und Dämpfungseinrichtung 9 zwischen dem unteren Gepäckfachelement 3 und dem oberen Gepäckfachelement 2 ersichtlich, mit welcher die Verschwenkung des beweglichen Gepäckfachelements 3 aus der geöffneten Position in die geschlossene Position unterstützt und eine Dämpfung des Schließ- bzw. Öffnungsvorgangs erzielt wird. In der gezeigten Ausführung ist je eine Feder- und Dämpfungseinrichtung 9 zwischen jeder Seitenwand 5 des unteren Gepäckfachelements 3 und jedem zugehörigen Seitenpaneel 6 des oberen Gepäckfachelements 2 vorgesehen.

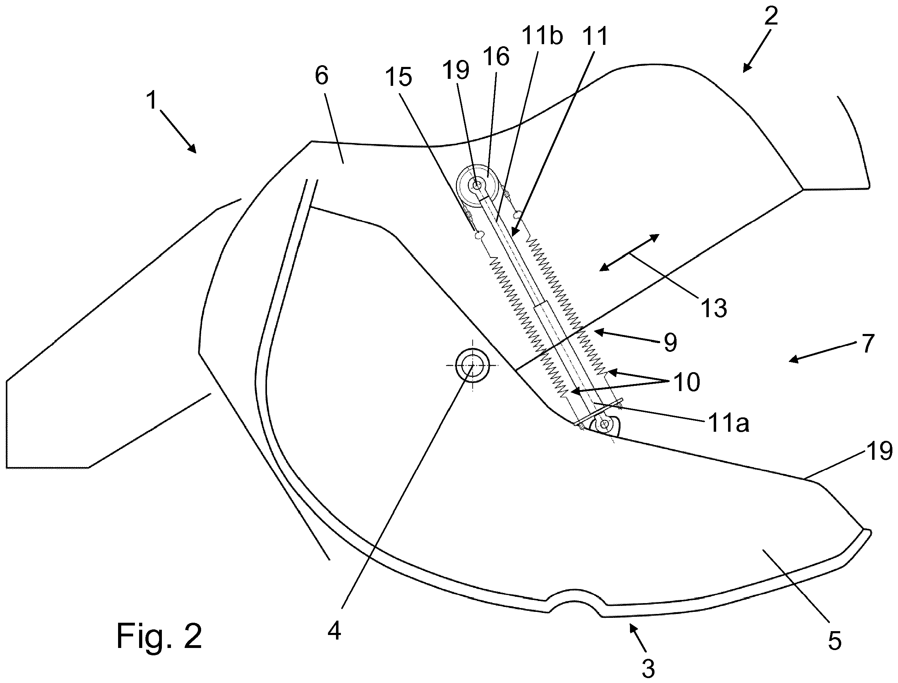

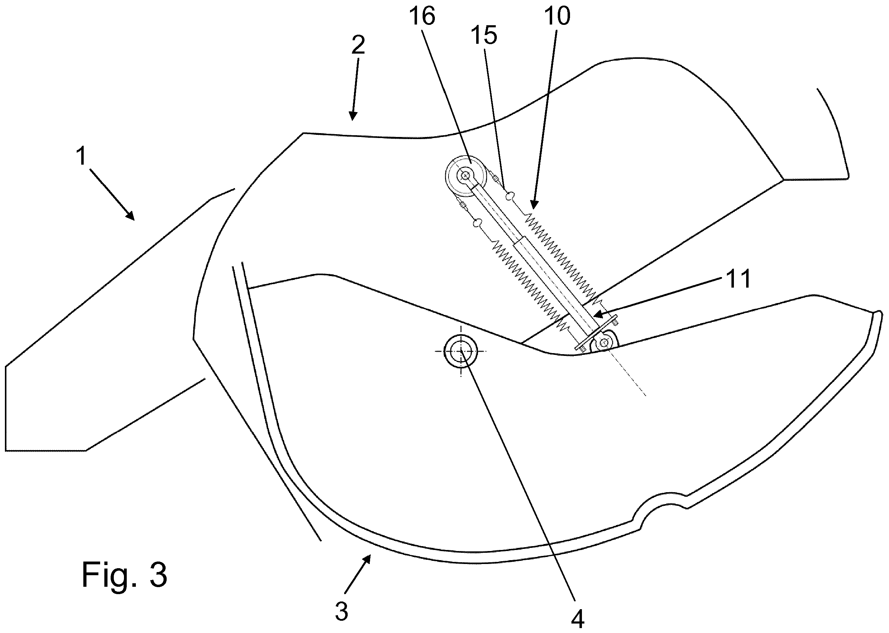

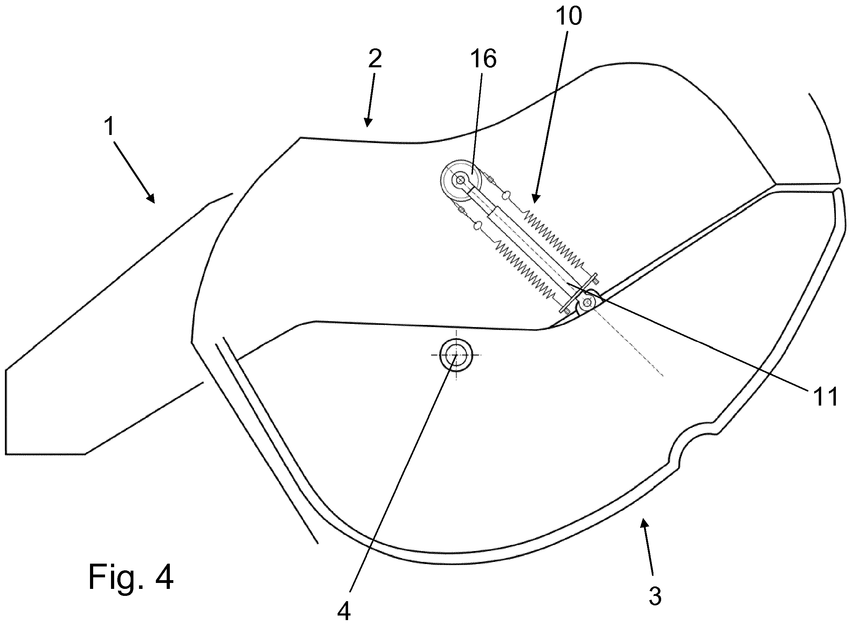

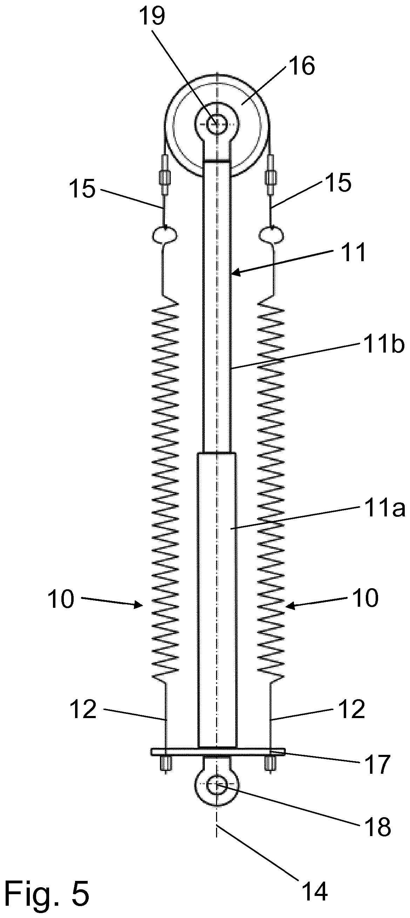

In den Fig. 2 bis 5 ist eine Ausführung des Gepäckfaches 1 gezeigt, welches wie in Fig. 1 dargestellt ausgeführt sein kann, jedoch eine davon verschiedene Feder- und Dämpfungseinrichtung 9 aufweist. Nachstehend wird daher lediglich auf die Unterschiede zur Ausführung gemäß Fig. 1 eingegangen.

Wie aus Fig. 2 bis 5 ersichtlich, weist die Feder- und Dämpfungseinrichtung 9 zumindest ein Federelement 10 zur Unterstützung der Bewegung des unteren Gepäckfachelements 3 von der Offen- in die Schließstellung und ein Dämpfungselement 11 zur Dämpfung der Bewegung des unteren Gepäckfachelements 3 auf. Bevorzugt kann mittels des Dämpfungselements 11 sowohl das Öffnen als auch das Schließen des Gepäckfaches 1 gedämpft werden.

Das Dämpfungselement 11 weist in bekannter Weise einen Zylinder 11a auf, in welchem ein Kolben 11b in Längsrichtung, d.h. in axialer Richtung, verschieblich ist. In dem Zylinder 11a ist in ebenfalls bekannter Weise ein Fluid, insbesondere Öl, angeordnet. Beim Verschieben des Kolbens 11b gegenüber dem Zylinder 11a wird das Fluid durch Kanäle bzw. Ventile im Kolben 11b gedrängt. Dabei wird Dämpfarbeit verrichtet, welche in eine Erwärmung des Fluids umgesetzt wird.

In der Ausführung der Fig. 2 bis 5 ist das zumindest eine Federelement 10 außerhalb des Dämpfungselements 11 angeordnet, wobei sich das Federelement 10 neben dem Dämpfungselement 11 erstreckt. Die Längsachse 12 des Federelements 10 ist in eine Richtung 13 parallel zur Hauptebene des Seitenpaneels 6 des oberen Gepäckfachelements 2, d.h. quer zur Flugrichtung, versetzt zu der Längsachse 14 des Dämpfungselements 11 angeordnet. In der gezeigten Ausführung ist die Längsachse 12 des Federelements 10 im Wesentlichen parallel zur Längsachse 14 des Dämpfungselements 11 angeordnet, wobei sich die Längsachse 12 des Federelements 10 in derselben vertikalen Ebene parallel zur Hauptebene des Seitenpaneels 6 des oberen Gepäckfachelements 2 erstreckt.

Wie aus Fig. 2 bis 5 weiters ersichtlich, weist die Feder- und Dämpfungseinrichtung 9 in der gezeigten Ausführung genau zwei Federelemente 10 auf, wobei das eine Federelement 10 auf der einen Längsseite des Dämpfungselements 11 und das andere Federelement auf der anderen Längsseite des Dämpfungselements 11 angeordnet ist. Die Federelemente 10 sind im Wesentlichen parallel zueinander angeordnet, wobei sich die Längsachsen 12 der Federelemente 10 im Wesentlichen parallel und in demselben Abstand zu dem Dämpfungselement 11 erstrecken. Beide Federelemente 10 sind in der gezeigten Ausführung als im Wesentlichen idente Schraubenfedern ausgebildet, welche in der Offenstellung des unteren Gepäckfachelementes 3 in einem gedehnten Zustand vorliegen, so dass die Bewegung des unteren Gepäckfachelementes 3 von der Offen- in die Schließstellung durch die Wirkung der Federelemente 10 unterstützt wird.

Wie aus Fig. 2 bis 5 weiters ersichtlich, sind die einen Enden der Federelemente 10 zum Kräfte- bzw. Toleranzausgleich über ein längliches Verbindungselement 15 miteinander verbunden, welches im Wesentlichen U-förmig um eine Umlenkrolle 16 umläuft. Die anderen Enden der Federelemente 10 sind jeweils an einer gemeinsamen Lagereinrichtung 17, insbesondere einer Lagerplatte, befestigt, welche an dem Dämpfungselement 11 angebracht ist. Das eine Ende des Dämpfungselements 11 ist um eine Schwenkachse 18 verschwenkbar an der Seitenwand 5 des unteren Gepäckfachelements und das andere Ende des Dämpfungselements 11 um eine Schwenkachse 19 verschwenkbar an dem Seitenpaneel 6 des oberen Gepäckfachelements 2 angeordnet. In der gezeigten Ausführung ist die Schwenkachse 18 des Dämpfungselements 11 auf Seite des unteren Gepäckfachelements 3 an einer von der Seitenwand 5 des unteren Gepäckfachelements 3 hochstehenden Lasche angeordnet.

## Patentansprüche

1. Überkopf-Gepäckfach (1) für ein Flugzeug, mit einem oberen Gepäckfachelement (2), mit einem unteren Gepäckfachelement (3), welches zwischen einer Offen- und einer Schließstellung beweglich ist, und mit einer ein Federelement (10) und ein Dämpfungselement (11) aufweisenden Feder- und Dämpfungseinrichtung (9), welche mit einem Seitenpaneel (6) des oberen Gepäckfachelements (2) und mit einer Seitenwand (5) des unteren Gepäckfachelements (3) verbunden ist, **dadurch gekennzeichnet, dass** das Federelement (10) außerhalb des Dämpfungselements (11), in eine Richtung (13) parallel zur Hauptebene des Seitenpaneels (6) des oberen Gepäckfachelements (2) bzw. der Seitenwand (5) des unteren Gepäckfachelements (3) versetzt zu dem Dämpfungselement (11) angeordnet ist, wobei die Längsachse (12) des Federelements (10) im Wesentlichen parallel zur Längsachse (14) des Dämpfungselements (11), in derselben Ebene parallel zur Hauptebene des Seitenpaneels (6) des oberen Gepäckfachelements (2) bzw. der Seitenwand (5) des unteren Gepäckfachelements (3) angeordnet ist, wobei die Federund Dämpfungseinrichtung (9) zwei Federelemente (10) aufweist, wobei das eine Federelement (10) auf der einen Seite des Dämpfungselements (11) und das andere Federelement (10) auf der anderen Seite des Dämpfungselements (11) angeordnet ist, wobei das eine Ende des Dämpfungselements (10) gelenkig an der Seitenwand (5) des unteren Gepäckfachelements (3) und das andere Ende des Dämpfungselements (11) gelenkig an dem Seitenpaneel (6) des oberen Gepäckfachelements (2) angeordnet ist, wobei die einen Enden der Federelemente (10) über eine Umlenkrolle (16) miteinander verbunden sind.

2. Überkopf-Gepäckfach (1) nach Anspruch 1, **dadurch gekennzeichnet, dass** die Federelemente (10) benachbart des Dämpfungselements (11) angeordnet sind.

3. Überkopf-Gepäckfach (1) nach Anspruch 1 oder 2, **dadurch gekennzeichnet, dass** die Federelemente (10) im Wesentlichen in demselben Abstand zu dem Dämpfungselement (11) angeordnet sind.

4. Überkopf-Gepäckfach (1) nach einem der Ansprüche 1 bis 3, **dadurch gekennzeichnet, dass** die anderen Enden der Federelemente (10) an einer gemeinsamen Lagereinrichtung (17), insbesondere einer Lagerplatte, befestigt sind.

5. Überkopf-Gepäckfach (1) nach einem der Ansprüche 1 bis 4, **dadurch gekennzeichnet, dass** als Federelement (10) eine Schraubenfeder und/oder als Dämpfungselement (11) ein Öldämpfer, vorgesehen ist.

6. Überkopf-Gepäckfach (1) nach einem der Ansprüche 1 bis 5, **dadurch gekennzeichnet, dass** das untere Gepäckfachelement (3) über ein Gelenk (4) verschwenkbar an dem oberen Gepäckfachelement (2) angeordnet ist.

## Claims

1. Overhead luggage compartment (1) for an aircraft, comprising an upper luggage compartment element (2), comprising a lower luggage compartment element (3) which can be moved between an open and a closed position, and comprising a spring and damping device (9) having a spring element (10) and a damping element (11), which device is connected to a side panel (6) of the upper luggage compartment element (2) and to a side wall (5) of the lower luggage compartment element (3), **characterised in that** the spring element (10) is arranged outside the damping element (11), in a direction (13) which is in parallel with the main plane of the side panel (6) of the upper luggage compartment element (2), or the side wall (5) of the lower luggage compartment element (3), and in a manner offset from the damping element (11), the longitudinal axis (12) of the spring element (10) being arranged substantially in parallel with the longitudinal axis (14) of the damping element (11), in the same plane in parallel with the main plane of the side panel (6) of the upper luggage compartment element (2), or the side wall (5) of the lower luggage compartment element (3), the spring and damping device (9) having two spring elements (10), one spring element (10) being arranged on one side of the damping element (11) and the other spring element (10) being arranged on the other side of the damping element (11), one end of the damping element (10) being hingedly mounted on the side wall (5) of the lower luggage compartment element (3) and the other end of the damping element (11) being hingedly mounted on the side panel (6) of the upper luggage compartment element (2), one end of each of the spring elements (10) being connected to one another via a deflection roller (16).

2. Overhead luggage compartment (1) according to claim 1, **characterised in that** the spring elements (10) are arranged adjacent to the damping element (11).

3. Overhead luggage compartment (1) according to either claim 1 or claim 2, **characterised in that** the spring elements (10) are arranged substantially at the same distance from the damping element (11).

4. Overhead luggage compartment (1) according to any of claims 1 to 3, **characterised in that** the other ends of the spring elements (10) are fastened to a common bearing device (17), in particular to a bearing plate.

5. Overhead luggage compartment (1) according to any of claims 1 to 4, **characterised in that** a helical spring is provided as the spring element (10) and/or an oil damper is provided as the damping element (11).

6. Overhead luggage compartment (1) according to any of claims 1 to 5, **characterised in that** the lower luggage compartment element (3) is pivotally mounted on the upper luggage compartment element (2) by means of a hinge (4).

## Revendications

1. Coffre à bagages surplombant (1) pour un avion, avec un élément de coffre à bagages supérieur (2), avec un élément de coffre à bagages inférieur (3), qui est mobile entre une position ouverte et une position fermée, et avec un dispositif à ressort et d'amortissement (9) présentant un élément à ressort (10) et un élément d'amortissement (11), qui est relié à un panneau latéral (6) de l'élément de coffre à bagages supérieur (2) et à une paroi latérale (5) de l'élément de coffre à bagages inférieur (3), **caractérisé en ce que** l'élément à ressort (10) est disposé décalé par rapport à l'élément d'amortissement (11) à l'extérieur de l'élément d'amortissement (11), dans une direction (13) parallèle au plan principal du panneau latéral (6) de l'élément de coffre à bagages supérieur (2) ou de la paroi latérale (5) de l'élément de coffre à bagages inférieur (3), où l'axe longitudinal (12) de l'élément à ressort (10) est disposé sensiblement parallèlement à l'axe longitudinal (14) de l'élément d'amortissement (11), dans le même plan parallèlement au plan principal du panneau latéral (6) de l'élément de coffre à bagages supérieur (2) ou de la paroi latérale (5) de l'élément de coffre à bagages inférieur (3), où le dispositif à ressort et d'amortissement (9) présente deux éléments à ressort (10), où un élément à ressort (10) est disposé d'un côté de l'élément d'amortissement (11) et l'autre élément à ressort (10) de l'autre côté de l'élément d'amortissement (11), où une première extrémité de l'élément d'amortissement (10) est disposée articulée sur la paroi latérale (5) de l'élément de coffre à bagages inférieur (3) et l'autre extrémité de l'élément d'amortissement (11) est disposée articulée sur le panneau latéral (6) de l'élément de coffre à bagages supérieur (2), où les premières extrémités des éléments à ressort (10) sont reliées l'une à l'autre par l'intermédiaire d'un galet de renvoi (16).

2. Coffre à bagages surplombant (1) selon la revendication 1, **caractérisé en ce que** les éléments à ressort (10) sont disposés au voisinage de l'élément d'amortissement (11).

3. Coffre à bagages surplombant (1) selon la revendication 1 ou 2, **caractérisé en ce que** les éléments à ressort (10) sont disposés sensiblement à la même distance de l'élément d'amortissement (11).

4. Coffre à bagages surplombant (1) selon l'une des revendications 1 à 3, **caractérisé en ce que** les autres extrémités des éléments à ressort (10) sont fixées à un dispositif d'appui commun (17), en particulier une plaque d'appui.

5. Coffre à bagages surplombant (1) selon l'une des revendications 1 à 4, **caractérisé en ce qu'**un ressort à boudin est prévu comme élément à ressort (10) et/ou un amortisseur à huile est prévu comme élément d'amortissement (11).

6. Coffre à bagages surplombant (1) selon l'une des revendications 1 à 5, **caractérisé en ce que** l'élément de coffre à bagages inférieur (3) est disposé de manière pivotante sur l'élément de coffre à bagages supérieur (2) par l'intermédiaire d'une articulation (4).
